# EUROPEAN PATENT APPLICATION

(11) **EP 4 755 935 A1**
(43) Date of publication of application: **10.06.2026**
(21) Application number: 24218025.5
(22) Date of filing: 06.12.2024
(51) Int. Cl.: C08F 212/12, C09J 125/16, C09J 153/02

(54) **HIGH SOFTENING POINT COPOLYMERS OF METHYLSTYRENE ISOMERIC MIXTURES**

(71) Applicant: Rain Carbon Germany GmbH, 44579 Castrop-Rauxel (DE)
(72) Inventor: RAUSER, Marian, 47475 Kamp-Lintfort (DE); CZARNY, Marvin, 44789 Bochum (DE)
(74) Representative: Cohausz & Florack

(57) **Abstract**

Herein described is a hydrocarbon resin comprising alpha-methylstyrene repeating units and vinyltoluene repeating units, the latter comprising at least 40 wt.% meta-vinyltoluene repeating units, as well as a method for the production of said resin. Also described is a hydrocarbon resin comprising alpha-methylstyrene repeating units and vinyltoluene repeating units, the latter comprising at least 85 wt.% para-vinyltoluene repeating units, and further also a hydrocarbon resin comprising alpha-methylstyrene repeating units and vinyltoluene repeating units, the latter comprising at least 30 wt.% meta- and at least 5 wt.% ortho-vinyltoluene repeating units, as well as to a method for the production of said resins.

## Description

### TECHNICAL FIELD

The invention relates to a hydrocarbon resin comprising alpha-methylstyrene repeating units and vinyltoluene repeating units, the latter comprising at least 40 wt.% meta-vinyltoluene repeating units, and to a method for the production of said resin. The invention also relates to a hydrocarbon resin comprising alpha-methylstyrene repeating units and vinyltoluene repeating units, the latter comprising at least 85 wt.% para-vinyltoluene repeating units, and further also to a hydrocarbon resin comprising alpha-methylstyrene repeating units and vinyltoluene repeating units, the latter comprising at least 30 wt.% meta- and at least 5 wt.% ortho-vinyltoluene repeating units, as well as to a method for the production of said resins.

### BACKGROUND

High softening point aromatic hydrocarbon resins are used as end block enhancers for pressure-sensitive adhesives (PSA), whereby their high softening point modifies especially the heat resistance of the adhesive. Optically visible PSA applications often demand low-colour ingredients, which includes the utilized resin. Pure monomer resins based on alpha-methylstyrene (AMS) and styrene or vinyltoluene (VT) are preferably used in this area, as they provide a low-colour product in contrast to common C9 fraction-based resins, which typically show significant discolouration.

However, these established resins show several disadvantages. The cationic copolymerization of AMS and styrene can only provide resins with a maximum softening point of approximately 140 °C, while the cationic copolymerization of AMS and commercially available VT with a maximum AMS content of 50 wt.% generates only a softening point of around 130 °C.

US 3,956,250 and US 3,630,981 describe AMS-VT resins with a high proportion of VT but achieve only low softening points of below 100 °C. The resins furthermore exhibit a markedly lower chain length than typical AMS-VT resins, with 98 wt.% of a sample showing maximum chain lengths of ca. 90 Å.

US 3,000,868, which uses a slightly higher proportion of AMS of 25-35 wt.%, compared with US 3,956,250 and US 3,630,981, achieves softening points of 100-130 °C.

US 3,640,981 describes resins with AMS/VT ratios of 40:60 to 60:40 and also achieves maximum softening points of around 130 °C.

EP 0 190 868 B1 describes terpolymers comprising 40-70 wt.% AMS, 5-30 wt.% VT, and 15-45 wt.% styrene, achieving comparatively low softening points of up to 110 °C.

Resins with higher softening points of 140 to 170 °C can only be generated via the combination of AMS and a synthetic VT feedstock with a high ratio of para-isomer (proportion of p-VT in the isomer mixture >85 wt.%) or via a very high AMS content in combination with very low temperatures of below 0 °C. However, both concepts have significant disadvantages. On the one hand, resins with a very high AMS content (>50 wt.%) have a low thermal stability due to the low celling temperature (63 °C) of AMS. On the other hand, the production of VT feedstock with a high proportion of p-VT is technically demanding and extremely costly, and the feedstock suffers from limited market availability.

US 3,803,079 describes the production of AMS-VT resins containing 50-90 wt.% AMS at low temperatures of down to -50 °C, achieving softening points in the range of 135-177 °C.

US 4,732,936 describes AMS-VT resins in varying AMS/VT ratios and with softening points of 150 °C or higher using a VT feedstock comprising >85 wt.% of p-VT.

Accordingly, a process that enables the production of AMS-VT resins with high softening points of above 130 °C without the necessity to employ either high proportions of AMS and low reaction temperatures or high proportions of the expensive p-VT isomer is desirable.

Thus, it is an object of the present invention to provide a cost-effective way of producing AMS-VT resins that achieve a high softening point, in addition to other favourable properties such as low colour, rendering them suitable end block enhancers for PSA.

Other and further objects, features and advantages of the present invention will become apparent more fully from the following description.

### SUMMARY OF THE INVENTION

Some or all of these objects are achieved in a first aspect of the present invention by providing a hydrocarbon resin comprising AMS repeating units and VT repeating units, wherein the hydrocarbon resin comprises at least 40 wt.% m-VT repeating units, based on the total mass of the VT repeating units. It was surprisingly found that the hydrocarbon resin according to the invention showed high softening points of more than 130 °C, without the need to employ either a very high proportion of AMS or to rely on the expensive p-VT as VT monomer feedstock.

The subject-matter of the first aspect of the invention is furthermore a method for the production of said hydrocarbon resin comprising at least 40 wt.% m-VT repeating units, wherein a polymerisation of a monomer mixture comprising AMS and a VT isomer mixture is conducted. The polymerisation is advantageously conducted for a period of 10 to 80 min, preferably of 20 to 70 min, more preferably of 30 to 60 min, even more preferably of 35 to 50 min and/or until a conversion of monomers of 50 % to 80 %, preferably of 65 % to 75 %, more preferably of 60 % to 70 %, even more preferably of 65 % to 69 %, based on the amount of monomers in the monomer mixture, is reached. Surprisingly, it was found that contrary to the teaching of the prior art it is not necessary to rely on p-VT as the VT monomer of choice. Instead, the method according to the invention enables the use of a VT isomer mix, for example obtained from a C9 fraction, which comprises p-VT, m-VT, and o-VT and is considerably less expensive than pure p-VT. Even with such a VT isomer mix, it was possible to obtain hydrocarbon resins with the desired properties, such as a softening point of higher than 130 °C.

As part of the first aspect, the invention is also directed to the use of a hydrocarbon resin according to the first aspect of the invention, or obtainable by the method according to the invention, in PSAs, reactive hot melt adhesives, sealants, plastic compounds, or thermoplastic elastomer compounds. Said hydrocarbon resins enhance the overall performance of adhesive formulation across multiple parameters.

The first aspect of the invention is furthermore directed to a composition comprising
- the hydrocarbon resin according to the first aspect according to the invention and/or produced by the method according to the first aspect of the invention,
- rubber, preferably selected from the group consisting of styrene-isoprene rubber (SIS), styrene-butadiene rubber (SBS), styrene-ethylene-butadiene rubber (SEES)
- and/or oil,
- and/or a hydrocarbon resin, preferably a C5-hydrocarbon resin or a hydrogenated C9-hydrocarbon resin, a DCPD-C9-hydrocarbon resin or a DCPD resin,
- and/or a plastic compound, preferably polystyrene or a styrene block copolymer (SBC),
- and optionally an antioxidant,
as well as to the use of said composition in labels, tapes, protective films, and hygiene products, in particular diapers.

Some or all of the above-mentioned objects are also achieved in a second aspect of the invention by providing a hydrocarbon resin comprising AMS repeating units and VT repeating units, wherein the hydrocarbon resin comprises at least 30 wt.% m-VT repeating units and at least 5 wt.%, preferably at least 10 wt.%, more preferably at least 15 wt.%, even more preferably at least 20 wt.% o-VT repeating units, based on the total mass of the VT repeating units. Hydrocarbon resins comprising significant amounts of the ortho-isomer of VT have not yet been disclosed in the prior art, as the commercially available VT isomer mixture is usually a mixture of p- and m-VT with only trace amounts of o-VT. In contrast, the VT isomer mix resulting from a C9 fraction (as shown in Table 1) comprises around 25 wt.% of the ortho-isomer. Even using this VT isomer mix, it was possible to obtain high softening points of more than 130 °C without needing to increase the proportion of AMS.

The subject-matter of the second aspect of the invention includes furthermore a method for the production of a hydrocarbon resin according to the second aspect of the invention, wherein a polymerisation of a monomer mixture comprising AMS and a VT isomer mixture is conducted. The polymerisation is advantageously conducted for a period of 10 to 80 min, preferably of 20 to 70 min, more preferably of 30 to 60 min, even more preferably of 35 to 50 min and/or until a conversion of monomers of 50 % to 80 %, preferably of 65 % to 75 %, more preferably of 60 % to 70 %, even more preferably of 65 % to 67 % is reached. The method according to the invention enables the use of a VT isomer mix. Even with such a VT isomer mix, it was possible to obtain hydrocarbon resins with the desired properties, such as a softening point of higher than 130 °C.

The second aspect of the present invention is also directed to the use of the hydrocarbon resin according to the second aspect of the invention or obtainable by the method according to the second aspect of the invention, in PSAs, reactive hot melt adhesives, sealants, plastic compounds, or thermoplastic elastomer compounds. Said hydrocarbon resins can enhance the overall performance of adhesive formulation across multiple parameters.

The subject-matter of the second aspect of the invention is furthermore a composition comprising
- the hydrocarbon resin according to the second aspect of the invention, comprising at least 85 wt.% p-VT repeating units, or at least 30 wt.% m-VT repeating units and at least 5 wt.% o-VT repeating units, and/or produced by the method according to the second aspect of the invention,
- rubber, preferably selected from the group consisting of styrene-isoprene rubber (SIS), styrene-butadiene rubber (SBS), styrene-ethylene-butadiene rubber (SEES)
- and/or oil,
- and/or a hydrocarbon resin, preferably a C5-hydrocarbon resin or a hydrogenated C9-hydrocarbon resin, a DCPD-C9-hydrocarbon resin or a DCPD resin,
- and/or a plastic compound, preferably polystyrene or a styrene block copolymer (SBC),
- and optionally an antioxidant,
as well as to the use of said composition in labels, tapes, protective films, and hygiene products, in particular diapers.

Some or all of the above-mentioned objects are also achieved in a third aspect of the invention by providing a hydrocarbon resin comprising AMS repeating units and VT repeating units, wherein the hydrocarbon resin comprises at least 85 wt.% p-VT repeating units, based on the total mass of the VT repeating units, and has a Mw of 2,500 to 30,000 g/mol, preferably of 5,000 to 27,000 g/mol, more preferably of 7,000 to 25,000 g/mol, even more preferably of 8,000 to 12,000 g/mol, and/or a Mn of 1,000 to 7,000 g/mol, preferably of 1,500 to 6,000 g/mol, more preferably of 2,500 to 5,000 g/mol, and/or a Mz of 4,000 to 30,000 g/mol, preferably of 5,000 to 27,000 g/mol, more preferably of 10,000 to 20,000 g/mol. Hydrocarbon resins of this type showed high softening points of 160 °C or higher and are well suited as additives for PSAs.

The subject-matter of the third aspect of the invention is furthermore a method for the production of the hydrocarbon resin according to the third aspect of the invention, wherein a polymerisation of a monomer mixture comprising AMS and a VT isomer mixture is conducted. With a VT isomer mix comprising at least 85 wt.% p-VT, it was possible to achieve softening points higher than 160 °C as well as high molecular weights.

As part of the third aspect, the invention is also directed to the use of the hydrocarbon resin according to the third aspect of the invention, or obtainable by the method according to the third aspect of the invention, in PSAs, reactive hot melt adhesives, sealants, plastic compounds, or thermoplastic elastomer compounds. Said hydrocarbon resins enhance the overall performance of adhesive formulation across multiple parameters.

The third aspect of the invention is furthermore directed to a composition comprising
- the hydrocarbon resin according to the third aspect of the invention and/or produced by the method according to the third aspect of the invention,
- rubber, preferably selected from the group consisting of styrene-isoprene rubber (SIS), styrene-butadiene rubber (SBS), styrene-ethylene-butadiene rubber (SEES)
- and/or oil,
- and/or a hydrocarbon resin, preferably a C5-hydrocarbon resin or a hydrogenated C9-hydrocarbon resin, a DCPD-C9-hydrocarbon resin or a DCPD resin,
- and/or a plastic compound, preferably polystyrene or a styrene block copolymer (SBC),
- and optionally an antioxidant,
as well as to the use of said composition in labels, tapes, protective films, and hygiene products, in particular diapers.

Surprisingly, the hydrocarbon resins according to the invention or prepared by the method according to the invention all showed high softening points and molecular weights and were well suited for application in adhesives, in particular in PSAs. Unlike previously described in the prior art, it was not necessary to rely on very high AMS contents, sub-zero reaction temperatures, and/or the exclusive use of p-VT to arrive at hydrocarbon resins with such desirable properties.

### PREFERRED EMBODIMENTS OF THE INVENTION

Further advantageous embodiments of the invention are specified in the dependent claims and are elucidated in detail herein below.

In a preferred embodiment of the first aspect of the invention, the hydrocarbon resin contains the AMS and VT repeating units in a weight ratio of 25:75 to 75:25, preferably of 30:70 to 70:30, more preferably of 40:60 to 60:40, even more preferably of 50:50, based on the total mass of the hydrocarbon resin. In contrast to the state of the art, with the hydrocarbon resins of the first aspect of the invention it is not necessary to employ a high ratio of AMS in order to achieve high softening points of more than 130 °C. As shown in the Examples, even softening points of more than 150 °C can be achieved with hydrocarbon resins according to the first aspect of the invention that comprise, for example, equal proportions of AMS and VT or even only a relatively small proportion of AMS.

The hydrocarbon resin according to the first aspect of the invention preferably shows a low level of discolouration. It may have a Gardner colour number of 1 or less, preferably of 0.8 or less, more preferably of 0.5 or less, even more preferably of 0.3 or less. The Gardner colour number is preferably determined according to ISO 4630, in particular ISO 4630:2015. A low level of discolouration is beneficial for applications in visible areas, for example in PSAs, where unsightly discolouration is undesirable. If a VT-fraction derived from a C9 fraction is used as VT monomer feedstock, it may contain impurities that result in a stronger discolouration. In this case, a simple decolourizing treatment such as the one described in the Examples can be used to remove the colour-generating impurities without affecting the composition of the VT-fraction itself.

The hydrocarbon resin according to the first aspect of the invention preferably has a softening point according to ASTM 3461 of at least 120 °C, preferably of at least 130 °C, more preferably of at least 140 °C, even more preferably of at least 150 °C, most preferably of at least 160 °C. In a preferred embodiment, the hydrocarbon resin according to the first aspect of the invention has a softening point according to ASTM 3461 of 120 °C to 190 °C, preferably of 130 °C to 180 °C, more preferably of 140 °C to 170 °C, even more preferably of 150 °C to 165 °C. High softening points are beneficial in particular for the use of the hydrocarbon resins as additives, as they improve the heat resistance of the product. However, AMS-VT hydrocarbon resins with high softening points of 130 °C or more are challenging to produce and typically require the use of a large proportion of AMS, which entails other disadvantages, the use of subzero reaction temperatures during the polymerisation, which can be challenging and expensive to implement especially on an industrial scale, and/or an extremely high proportion of the para-isomer among the VT isomers employed, which is much more costly than a more balanced isomeric mixture such as that obtained from a C9 fraction or commercially available mixtures of meta- and para-isomers. Surprisingly, the hydrocarbon resins according to the first aspect of the invention show that high softening points, even exceeding 160 °C, can be achieved even with at least 40 wt.% m-VT repeating units, based on the total mass of the VT repeating units.

Without wishing to be bound by scientific theory, it is believed that the reduced conversion rate of the copolymerization of AMS and VT by premature quenching of the reaction is a significant factor in furnishing AMS-VT resins with high softening point and high molecular weight. With long reaction times, i.e. for reactions approaching complete conversion, the molecular weight was found to decrease, along with resultant lower softening points. However, many of the documents of the prior art, such as US 3,803,079, US 3,630,981, or US 4,732,936, to name a few, state that the polymerisation was to proceed e.g. to yields >95% or to complete conversion.

According to a further embodiment of the first aspect of the invention, the hydrocarbon resin has a glass transition temperature (Tg) of 70 °C to 120 °C, preferably of 85 °C to 115 °C, more preferably of 95 °C to 110 °C. A Tg in the indicated range is beneficial in particular for the use of the hydrocarbon resins as additives in PSAs.

The glass transition temperature is preferably measured using differential scanning calorimetry (DSC). A DSC 2/400 with intra cooler from Mettler Toledo may be employed. For the measurement, aluminum crucibles with pin holes, in particular ME-26763 AL-Crucibles, may be employed. For the evaluation of the glass transition temperature, a heating-cooling-heating-cooling sequence may be employed with a heating / cooling rate of 10 K/min within a measuring window between -40 °C to 150 °C. The Tg evaluation is preferably performed in accordance with DIN 53765, in particular DIN 53765:1994-03.

In a preferred embodiment, the hydrocarbon resin according to the first aspect of the invention has a weight-average molecular weight Mw of 2,500 to 30,000 g/mol, preferably of 5,000 to 27,000 g/mol, more preferably of 7,000 to 25,000 g/mol, even more preferably of 8,000 to 12,000 g/mol, and/or a number-average molecular weight Mn of 1,000 to 7,000 g/mol, preferably of 1,500 to 6,000 g/mol, more preferably of 2,500 to 5,000 g/mol, and/or a z-average molecular weight Mz of 4,000 to 30,000 g/mol, preferably of 5,000 to 27,000 g/mol, more preferably of 10,000 to 20,000 g/mol. The molecular weight influences many other properties of the hydrocarbon resin, such as the softening point. Resins with higher molecular weight typically also have a higher softening point than resins with lower molecular weight. For the AMS-VT resins according to the invention, high molecular weights could be achieved by premature quenching of the polymerisation reaction, while the comparative examples with longer reaction times showed lower molecular weights.

The number average molecular weight (Mn), the mass average molecular weight (Mw), and the z-average molecular weight (Mz) may in particular be determined using gel permeation chromatography (GPC). In GPC, styrene-divinylbenzene copolymers may be used as column material. A 3 µm precolumn and three 3 µm 1000 Å main columns may be used. A SECcurity²-System by PSS-Polymers may be used. The substances may be detected with an RI detector. Unstabilized ULC/MS-grade THF is preferably used as eluent. The measurements are preferably run isothermal at 40 °C. For the calibration curve, ReadyCal-Kit Poly(styrene) low (Mp 266-66,000 Da) by PSS-Polymer may be used as external standard.

Advantageously, the hydrocarbon resin according to the first aspect of the invention has a polydispersity index (PDI) of 1 to 3.0, preferably of 1.5 to 2.8, more preferably of 1.5 to 2.5, even more preferably of 1.5 to 2.3, most preferably of 1.5 to 2.1. The PDI is a measure of the distribution of molecular mass in a given polymer sample; as the polymer chains approach uniform chain length, the PDI approaches a value of 1. Hydrocarbon resins with a PDI in the indicated range show particularly good compatibility with adhesives, for example PSAs.

In an embodiment of the method according to the first aspect of the invention, the VT isomer mixture comprises at least 40 wt.% m-VT, based on the total mass of the VT isomer mixture. Surprisingly, with the method according to the invention high softening points of more than 130 °C or even exceeding 160 °C can be achieved even with an isomer mixture comprising at least 40 wt.% m-VT, based on the total mass of the VT isomer mixture.

According to an embodiment, the VT isomer mixture employed in the method according to the first aspect of the invention comprises at least 5 wt.%, preferably at least 10 wt.%, more preferably at least 15 wt.%, even more preferably at least 20 wt.% o-VT, based on the total mass of the VT isomer mixture. While o-VT is not typically included in commercially available VT isomer mixtures, it can, for example, be obtained from a C9 fraction at low cost. AMS-VT resins produced from a VT isomer mixture comprising at least 5 wt.% o-VT show excellent compatibility with adhesives, in particular PSAs, and desirable properties such as high softening point, high molecular weight, and low Gardner colour number.

The VT isomer mixture employed in the method according to the first aspect of the invention may advantageously comprise 20-30 wt.% p-VT, 20-30 wt.% o-VT, and 40-60 wt.% m-VT, based on the total mass of the VT isomer mixture. Such an isomer mixture results in AMS-VT resins with desirable properties and can be obtained at low cost from a C9 fraction.

In a preferred embodiment of the method according to the first aspect of the invention, the polymerisation is carried out at a temperature of -20 °C to 20 °C, preferably of -10 °C to 10 °C, more preferably of -5 °C to 5 °C. While some prior art documents, such as US 3,803,079, describe the need for subzero temperatures even down to -50 °C in order to arrive at high softening points, the method of the invention allows the use of more moderate temperatures such as those indicated above. In particular, when quenching the polymerisation reaction prematurely, comparatively higher temperatures can be employed than would be possible for reactions with longer reaction times, while still achieving softening points of more than 130 °C or even more than 150 °C.

In a preferred embodiment of the method according to the first aspect of the invention, the polymerisation reaction is carried out in a batch reactor.

According to one embodiment of the method according to the first aspect of the invention, the monomer mixture comprises a non-polymerisable solvent, preferably selected from the group consisting of o-xylene, m-xylene, p-xylene, ethylbenzene, and mixtures thereof.

In a preferred embodiment of the method according to the first aspect of the invention, the polymerisation is carried out using a Friedel-Crafts-catalyst, preferably a Lewis acid or a Brønsted acid. More preferably, the catalyst is selected from the group consisting of aluminium trichloride, boron trifluoride, boron trichloride, tin tetrachloride, titanium tetrachloride, para-toluene sulfonic acid, and mixtures thereof. Most preferably, the catalyst is boron trifluoride diethyl etherate.

In an embodiment of the second aspect of the invention, the hydrocarbon resin contains the AMS repeating units and the VT repeating units in a weight ratio of 25:75 to 75:25, preferably of 30:70 to 70:30, more preferably of 40:60 to 60:40, even more preferably of 50:50, based on the total mass of the hydrocarbon resin. In contrast to the state of the art, with the hydrocarbon resins of the second aspect of the invention it is not necessary to employ a high ratio of AMS in order to achieve high softening points of more than 130 °C. As shown in the Examples, even softening points of more than 150 °C can be achieved with hydrocarbon resins according to the second aspect of the invention that comprise, for example, equal proportions of AMS and VT or even only a relatively small proportion of AMS.

The hydrocarbon resin according to the second aspect of the invention preferably shows a low level of discolouration. It may have a Gardner colour number of 5 or less, preferably of 2 or less, more preferably of 1 or less, even more preferably of 0.3 or less. The Gardner colour number is preferably determined according to ISO 4630, in particular ISO 4630:2015. A low level of discolouration is beneficial for applications in visible areas, for example in PSAs, where unsightly discolouration is undesirable. If a VT-fraction derived from a C9 fraction is used as VT monomer feedstock, it may contain impurities that result in a stronger discolouration. In this case, a simple decolourizing treatment such as the one described in the Examples can be used to remove the colour-generating impurities without affecting the composition of the VT-fraction itself.

The hydrocarbon resin according to the second aspect of the invention preferably has a softening point according to ASTM 3461 of at least 120 °C, preferably of at least 130 °C, more preferably of at least 140 °C, even more preferably of at least 150 °C, most preferably of at least 160 °C. In a preferred embodiment, the hydrocarbon resin according to the first aspect of the invention has a softening point according to ASTM 3461 of 120 °C to 190 °C, preferably of 130 °C to 180 °C, more preferably of 140 °C to 170 °C, even more preferably of 150 °C to 165 °C. High softening points are beneficial in particular for the use of the hydrocarbon resins as additives, as they improve the heat resistance of the product. However, AMS-VT hydrocarbon resins with high softening points of 130 °C or more are challenging to produce and typically require the use of a large proportion of AMS, which entails other disadvantages, the use of subzero reaction temperatures during the polymerisation, which can be challenging and expensive to implement especially on an industrial scale, and/or an extremely high proportion of the para-isomer among the VT isomers employed, which is much more costly than a more balanced isomeric mixture such as that obtained from a C9 fraction or commercially available mixtures of meta- and para-isomers. Surprisingly, the hydrocarbon resins according to the second aspect of the invention show that high softening points, even exceeding 150 °C, can be achieved even for AMS-VT resins comprising at least 30 wt.% m-VT repeating units and at least 5 wt.% o-VT repeating units.

Without wishing to be bound by scientific theory, it is believed that the reduced conversion rate of the copolymerization of AMS and VT by premature quenching of the reaction is a significant factor in furnishing AMS-VT resins with high softening point and high molecular weight. With long reaction times, i.e. for reactions approaching complete conversion, the molecular weight was found to decrease, along with resultant lower softening points. However, many of the documents of the prior art, such as US 3,803,079, US 3,630,981, or US 4,732,936, to name a few, state that the polymerisation was to proceed e.g. to yields >95% or to complete conversion. According to a further embodiment of the second aspect of the invention, the hydrocarbon resin has a glass transition temperature (Tg) of 70 °C to 120 °C, preferably of 85 °C to 115 °C, more preferably of 95 °C to 110 °C. A Tg in the indicated range is beneficial in particular for the use of the hydrocarbon resins as additives in PSAs.

In a preferred embodiment, the hydrocarbon resin according to the second aspect of the invention has a weight-average molecular weight Mw of 2,500 to 30,000 g/mol, preferably of 5,000 to 27,000 g/mol, more preferably of 7,000 to 25,000 g/mol, even more preferably of 8,000 to 12,000 g/mol, and/or a number-average molecular weight Mn of 1,000 to 7,000 g/mol, preferably of 1,500 to 6,000 g/mol, more preferably of 2,500 to 5,000 g/mol, and/or a z-average molecular weight Mz of 4,000 to 30,000 g/mol, preferably of 5,000 to 27,000 g/mol, more preferably of 10,000 to 20,000 g/mol. The molecular weight influences many other properties of the hydrocarbon resin, such as the softening point. Resins with higher molecular weight typically also have a higher softening point than resins with lower molecular weight. For the AMS-VT resins according to the invention, high molecular weights could be achieved by premature quenching of the polymerisation reaction, while the comparative examples with longer reaction times showed lower molecular weights.

Advantageously, the hydrocarbon resin according to the second aspect of the invention has a PDI of 1 to 3.0, preferably of 1.5 to 2.8, more preferably of 1.5 to 2.5, even more preferably of 1.5 to 2.3, most preferably of 1.5 to 2.1. The PDI is a measure of the distribution of molecular mass in a given polymer sample; as the polymer chains approach uniform chain length, the PDI approaches a value of 1. Hydrocarbon resins with a PDI in the indicated range show particularly good compatibility with adhesives, for example PSAs.

According to an embodiment, the VT isomer mixture employed in the method according to the second aspect of the invention comprises at least 5 wt.%, preferably at least 10 wt.%, more preferably at least 15 wt.%, even more preferably at least 20 wt.% o-VT, based on the total mass of the VT isomer mixture.

According to another embodiment, the VT isomer mixture employed in the method according to the second aspect of the invention comprises at least 30 wt.% m-VT and at least 5 wt.%, preferably at least 10 wt.%, more preferably at least 15 wt.%, even more preferably at least 20 wt.% o-VT, based on the total mass of the VT isomer mixture. While o-VT is not typically included in commercially available VT isomer mixtures, it can, for example, be obtained from a C9 fraction at low cost. AMS-VT resins produced from a VT isomer mixture comprising at least 5 wt.% o-VT show excellent compatibility with adhesives, in particular PSAs, and desirable properties such as high softening point, high molecular weight, and low Gardner colour number. For example, the VT isomer mix resulting from a C9 fraction and used in the current invention, see Table 1 comprises around 25 wt.% of the ortho-isomer. Even using this VT isomer mix, employing the method of the invention it was possible to obtain high softening points of more than 130 °C without needing to increase the proportion of AMS.

The VT isomer mixture employed in the method according to the second aspect of the invention may advantageously comprise 20-30 wt.% p-VT, 20-30 wt.% o-VT, and 40-60 wt.% m-VT, based on the total mass of the VT isomer mixture. Such an isomer mixture results in AMS-VT resins with desirable properties and can be obtained at low cost from a C9 fraction.

In an embodiment of the method according to the second aspect of the invention, the polymerisation is carried out at a temperature of -20 °C to 20 °C, preferably of -10 °C to 10 °C, more preferably of -5 °C to 5 °C. While some prior art documents, such as US 3,803,079, describe the need for subzero temperatures even down to -50 °C in order to arrive at high softening points, the method of the invention allows the use of more moderate temperatures such as those indicated above. In particular, when quenching the polymerisation reaction prematurely, comparatively higher temperatures can be employed than would be possible for reactions with longer reaction times, while still achieving softening points of more than 130 °C or even more than 150 °C.

Advantageously, the VT isomer mixture employed in the method according to the second aspect of the invention is obtained via synthesis or from a C9 fraction by a combination of distillation and pre-polymerisation. Obtaining the VT isomer mixture from a C9 fraction is economically beneficial as the C9 fraction is a comparatively inexpensive byproduct of naphtha cracking. Any colour-inducing impurities present in the C9-based fraction are easily removed via a simple decolourization pretreatment as described in the Examples. Further, the C9-based fraction typically comprises significant amounts of o-VT, which is not usually present beyond trace amounts in commercially available synthetic VT isomer mixtures.

In a preferred embodiment of the method according to the second aspect of the invention, the polymerisation reaction is carried out in a batch reactor.

According to one embodiment of the method according to the second aspect of the invention, the monomer mixture comprises a non-polymerisable solvent, preferably selected from the group consisting of o-xylene, m-xylene, p-xylene, ethylbenzene, and mixtures thereof.

In a preferred embodiment of the method according to the second aspect of the invention, the polymerisation is carried out using a Friedel-Crafts-catalyst, preferably a Lewis acid or a Brønsted acid. More preferably, the catalyst is selected from the group consisting of aluminium trichloride, boron trifluoride, boron trichloride, tin tetrachloride, titanium tetrachloride, para-toluene sulfonic acid, and mixtures thereof. Most preferably, the catalyst is boron trifluoride diethyl etherate.

In an embodiment of the method according to the third aspect of the invention, the VT isomer mixture comprises at least 85 wt.% p-VT, based on the total mass of the VT isomer mixture. Using a VT isomer mixture comprising at least 85 wt.% p-VT, it was possible to obtain hydrocarbon resins showing high softening points of 160 °C or higher and Mw values of more than 9'000 g/mol, which are well suited as additives for PSAs.

In a preferred embodiment of the method according to the third aspect of the invention, the polymerisation reaction is carried out in a batch reactor.

According to one embodiment of the method according to the third aspect of the invention, the monomer mixture comprises a non-polymerisable solvent, preferably selected from the group consisting of o-xylene, m-xylene, p-xylene, ethylbenzene, and mixtures thereof.

In a preferred embodiment of the method according to the third aspect of the invention, the polymerisation is carried out using a Friedel-Crafts-catalyst, preferably a Lewis acid or a Brønsted acid. More preferably, the catalyst is selected from the group consisting of aluminium trichloride, boron trifluoride, boron trichloride, tin tetrachloride, titanium tetrachloride, para-toluene sulfonic acid, and mixtures thereof. Most preferably, the catalyst is boron trifluoride diethyl etherate.

In a fourth aspect, the invention relates to a method for obtaining a decolourized VT-fraction by purification of a VT-fraction. The method comprises a mixing step comprising mixing the VT-fraction with a Friedel-Crafts-catalyst, preferably a Lewis acid or a Bronsted acid, more preferably a catalyst selected from the group consisting of aluminium trichloride, boron trifluoride, boron trichloride, tin tetrachloride, titanium tetrachloride, para-toluene sulfonic acid, and mixtures thereof, most preferably boron trifluoride diethyl etherate (BF₃·(OEt₂)), to obtain a reaction mixture, a quenching step comprising adding a quenching agent to the reaction mixture to obtain a quenched mixture, and a purifying step comprising purifying, preferably filtering and/or distilling the quenched mixture to obtain the decolourized VT-fraction. The method preferably comprises a first stirring step comprising stirring the reaction mixture. The method preferably comprises a second stirring step comprising stirring the quenched mixture. The mixing step and/or the first stirring step and/or the second stirring step is preferably conducted at a temperature of 0°C to 80°C, more preferably of 20 to 60 °C, even more preferably of 30 to 50 °C, most preferably at 35 to 45 °C. The first stirring step is preferably conducted for a certain period of time, preferably for 30 to 60 min, more preferably for 40 to 50 min. The quenching agent is preferably added to the reaction after this amount of time. The quenching agent is preferably selected from the group consisting of lime, pyridine, sodium hydroxide and mixtures thereof. The second stirring step is preferably conducted for a certain period of time, preferably for 1 to 60 min, more preferably for 5 to 40 min, more preferably for 10 to 20 min. The method according to the fourth aspect of the invention allows the removal of colour-generating impurities from the VT-fraction without significantly affecting the general composition of the VT-fraction.

In the following, the invention is further described by way of examples that are in no way meant to be limiting.

### DESCRIPTION OF FIGURES

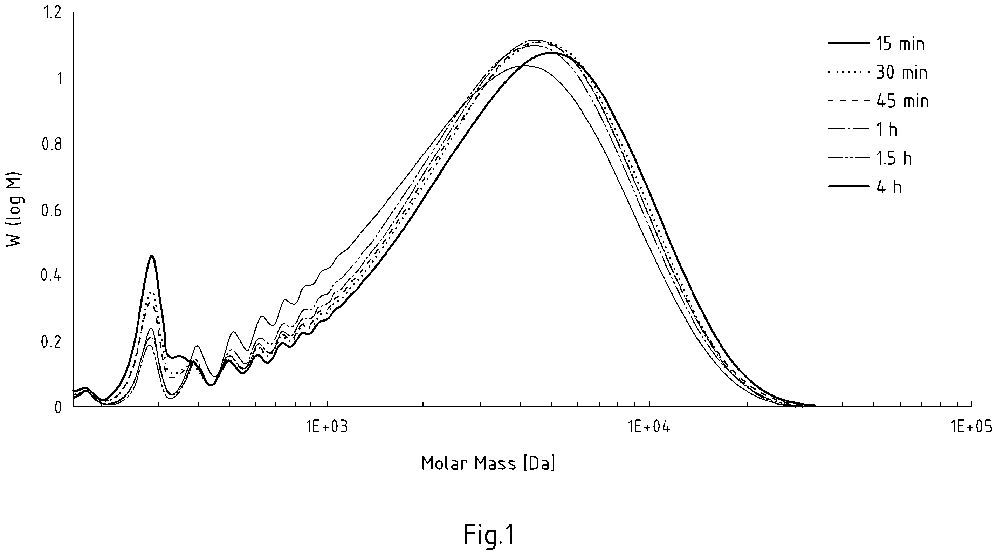

- Fig. 1: shows a time-resolved evolution of the molecular weight distribution of example 1, with the x-axis showing the molecular weight in Dalton and the y-axis showing W (log M). The molecular weight distribution shifts from higher molecular weight at short reaction times to lower molecular weight at longer reaction times.

### EXAMPLES

### Materials

### Abbreviations

AMS = alpha-methylstyrene
BF₃·OEt₂ = boron trifluoride diethyl etherate
BOPP = biaxially oriented polypropylene
comp. = comparative
PE = polyethylene
PSA = pressure-sensitive adhesive
RT = room temperature
VT = vinyltoluene

### Suppliers

| **Chemical** | **Purity** | **Supplier** |
|---|---|---|
| VT (44% meta, 56% para) | 99% | Sigma-Aldrich |
| para-VT | 96% | Sigma-Aldrich |
| Xylene (isomer mixtures) | 99% | TACChem |
| AMS | 99% | Sigma-Aldrich |
| BF₃·OEt₂ | >98% | Bernd Kraft |
| Crude VT-fraction^{a} | | Rain Carbon |

| | | |
|---|---|---|
| ^{a} - generated via industrial-scale fractioned distillation of a C9 fraction | | |

### General procedure for manufacture of decolourized VT-fraction by VT-fraction purification

A 2 L three neck flask equipped with an overhead stirrer and Dimroth coil condenser was charged with VT-fraction (800 g) at 40 °C followed by the addition of BF₃·(OEt₂) (0.425 mL). The mixture was continuously stirred for 45 min at 40 °C. The reaction was quenched by addition of lime (7.2 g) and stirred for 15 min. Filtration of the crude product and distillation at 100 °C and 45 mbar yielded 776 g (97% yield) of a colourless liquid. The monomer composition of the crude and decolourized VT fraction is shown in Table 1.

**Table 1: Composition of VT-fraction before purification and after purification (decolourized VT-fraction)**

| | **VT-fraction** | **decolourized VT-fraction** |
|---|---|---|
| AMS [wt.%] | 7.6 | 7.2 |
| o-VT [wt.%] | 10.8 | 10.7 |
| m-VT [wt.%] | 26.4 | 26.2 |
| p-VT [wt.%] | 6.1 | 5.9 |
| Other [wt.%] | 2.4 | 2.3 |
| Non-reactive compounds [wt.%] | 46.7 | 47.7 |
| Gardner colour | 6.5 | 0.1 |

As shown in Table 1, the decolourization removes colour-generating impurities without major impact on the general composition.

### Analytical methods

### Molar mass distribution via GPC

The molar mass distribution (Mn, Mw, Mz) was estimated via gel permeation chromatography (GPC) with a SECcurity²-System supplied by the company PSS-Polymers. The used column system consists of a 3 µm precolumn and three 3 µm 1000 Å main columns filled with a styrene divinylbenzene copolymer as column material. For substance detection a refraction index (RI) detector was used. Unstabilized ULC/MS-grade THF, supplied by the company Biosolve, was used as eluent. Each measurement run was performed isothermal at 40 °C. ReadyCal-Kit Poly(styrene) low (Mp 266 - 66,000 Da) was used as external standard supplied by PSS-Polymer.

### Glass transition temperature via DSC

The glass transition temperature (Tg) was estimated with a DSC 2/400 with intra cooler supplied by the company Mettler Toledo. Aluminium crucibles with pin hole with a volume of 40 µL (Me-26763 AL-Crucibles) were used as sample vessels. The sample weight amounted to 10 - 20 mg. For the evaluation of the thermal properties, a heating-cooling-heating-cooling sequence was chosen as analytical method with a heating/cooling rate of 10 K/min within a measuring window between -10 °C to 150 °C. The Tg evaluation was performed in accordance with ASTM D 6604.

### Softening point via Mettler Ring & Ball

The softening point (SP) was estimated via the method "Ring & Ball" in accordance with ASTM D 3461 "Softening point of asphalt and pitch - Mettler cup and ball method". A FP 90 Central Processor in combination with a FP 83 HT Dropping Point Cell supplied by Mettler Toledo was used a testing device.

### Composition analysis via GC

The composition of the feed was analysed via gas chromatography (GC) with a Trace 1310 system supplied by the company Thermo Scientific. The used column was a CP-Wax 52 CB (60 m × 0.32 mm, 1.20 µm) by the company Agilent Technologies with hydrogen carrier gas at constant flowrate of 2 mL/min. The sample was injected to a split/splitless inlet at 250 °C with split ratio of 40. Each measurement run was performed at a temperature ramp: 140 °C (5 min), 5 °C/min to 190 °C (0 min), 50 °C/min to 250 °C (4.8 min). For signal detection, a flame ionization (FI) detector at 250 °C with nitrogen as makeup gas was used.

### Preparation of adhesive stripes

The formulation was mixed in a tin can with an electrical stirring unit equipped with a 3-blade propeller stirrer. The temperature was 180 °C. Stirring was continued until a homogeneous mixture was achieved. The PSA adhesives were dissolved in toluene (20 g adhesive, 24 g toluene) and coated (300 µm) on a BOPP strip. The strips were stored for 15 min at RT, for 15 min at 90 °C and for 24 h at room temperature. The coated BOPP strips were cut 25 mm wide for the testing.

### Loop tack

Loop tack was tested with a Zwicki Z2.5/TN (ZwickRoell) material testing machine on stainless steel as substrate, in accordance with FINAT FTM 9. All tests were carried out under ambient conditions.

### Peel 180°

Peel 180° was tested with a Zwicki Z2.5/TN (ZwickRoell) material testing machine on stainless steel or PE as substrate, in accordance with FINAT 1. All tests were carried out under ambient conditions.

### Rolling ball

An inclined plane with a steel ball placed on top was used. An adhesive-coated stripe was placed horizontally at the bottom of the inclined plane. The ball rolled down the plane onto the adhesive strip. The distance the ball travelled on the adhesive strip was recorded. Rolling ball was tested in accordance with ASTM D 3121. All tests were carried out under ambient conditions.

### Shear adhesive failure temperature (SAFT)

The adhesive-coated strips were adhered to a steel or PE plate and reinforced with a 1 kg hand roller. The plates were fixed in an oven and the stripes were loaded with a 500 g weight and then exposed to a temperature ramp. The temperature at which the bond between the adhesive-coated strips and plate failed was recorded. SAFT was tested in accordance with FINAT FTM 8.

### Holding power

Sample preparation was performed according to SAFT. Samples were exposed to a constant temperature of 70 °C. The time until the bond between the adhesive-coated strips and plate failed was recorded.

### Example 1

A 1 L tank reactor equipped with an overhead stirrer was charged with decolourized VT-fraction (615 g) and AMS (185 g). After the mixture was cooled to 0 °C, the reaction was started by adding BF₃·(OEt₂) in portions (2.11 mL, 0.5 wt.% on monomers) and subsequently stirred for 240 min at 0 °C. Then, the reaction was quenched by releasing the mixture into a solution of pyridine (2 g) and toluene (120 g). Filtration of the crude product and purification via steam distillation at 250 °C yielded the resin as colourless solid (198 g, 72% yield).

**Table 2: Analysis values example 1**

| **SP [°C]** | **Tg [°C]** | **Gardner colour** | **Mn [g/mol]** | **Mw [g/mol]** | **Mz [g/mol]** |
|---|---|---|---|---|---|
| 141 | 89 | 0.2 | 1763 | 4152 | 7225 |

### Example 2

A 1 L tank reactor equipped with an overhead stirrer was charged with decolourized VT-fraction (588 g) and AMS (212 g). After the mixture was cooled to 0 °C, the reaction was started by adding BF₃·(OEt₂) in portions (2.31 mL, 0.5 wt.% on monomers) and subsequently stirred for 40 min at 0 °C. Then, the reaction was quenched by releasing the mixture into a solution of pyridine (2 g) and toluene (60 g). Filtration of the crude product and purification via steam distillation at 250 °C yielded the resin as colourless solid (158 g, 49% yield).

**Table 3: Analysis values example 2**

| **SP [°C]** | **Tg [°C]** | **Gardner colour** | **Mn [g/mol]** | **Mw [g/mol]** | **Mz [g/mol]** |
|---|---|---|---|---|---|
| 158 | 100 | 0.8 | 2862 | 8568 | 14756 |

### Example 3

A 1 L tank reactor equipped with an overhead stirrer was charged with crude VT-fraction (586 g) and AMS (214 g). After the mixture was cooled to 0 °C, the reaction was started by adding BF₃·(OEt₂) in portions (2.35 mL, 0.5 wt.% on monomers) and subsequently stirred for 40 min at 0 °C. Then, the reaction was quenched by releasing the mixture into a solution of pyridine (2 g) and toluene (60 g). Filtration of the crude product and purification via steam distillation at 250 °C yielded the resin as solid (117 g, 37% yield).

**Table 4: Analysis values example 3**

| **SP [°C]** | **Tg [°C]** | **Gardner colour** | **Mn [g/mol]** | **Mw [g/mol]** | **Mz [g/mol]** |
|---|---|---|---|---|---|
| 158 | 99 | 8.2 | 2853 | 9729 | 18039 |

### Example 4

A 1 L tank reactor equipped with an overhead stirrer was charged with decolourized VT-fraction (505 g) and AMS (195 g). After the mixture was cooled to 10 °C, the reaction was started by adding BF₃·(OEt₂) in portions (1.98 mL, 0.5 wt.% on monomers) and subsequently stirred for 60 min at 10 °C. Then, the reaction was quenched by releasing the mixture into a solution of pyridine (1.6 g) and toluene (80 g). Filtration of the crude product and purification via steam distillation at 250 °C yielded the resin as colourless solid (194 g, 67% yield).

**Table 5: Analysis values example 4**

| **SP [°C]** | **Tg [°C]** | **Gardner colour** | **Mn [g/mol]** | **Mw [g/mol]** | **Mz [g/mol]** |
|---|---|---|---|---|---|
| 138 | 87 | 0.3 | 1562 | 3118 | 5126 |

### Example 5

A 1 L tank reactor equipped with an overhead stirrer was charged with decolourized VT-fraction (719 g) and AMS (81 g). After the mixture was cooled to 0 °C, the reaction was started by adding BF₃·(OEt₂) in portions (2.03 mL, 0.5 wt.% on monomers) and subsequently stirred for 240 min at 0° C. Then, the reaction was quenched by releasing the mixture into a solution of pyridine (1.9 g) and toluene (20 g). Filtration of the crude product and purification via steam distillation at 250 °C yielded the resin as colourless solid (192 g, 65% yield).

**Table 6: Analysis values example 5**

| **SP [°C]** | **Tg [°C]** | **Gardner colour** | **Mn [g/mol]** | **Mw [g/mol]** | **Mz [g/mol]** |
|---|---|---|---|---|---|
| 151 | 98 | 0.4 | 2810 | 7819 | 14205 |

### Example 6

A 1 L tank reactor equipped with an overhead stirrer was charged with decolourized VT-fraction (721 g) and AMS (79 g). After the mixture was cooled to 0 °C, the reaction was started by adding BF₃·(OEt₂) in portions (2.02 mL, 0.5 wt.% on monomers) and subsequently stirred for 40 min at 0 °C. Then, the reaction was quenched by releasing the mixture into a solution of pyridine (1.9 g) and toluene (20 g). Filtration of the crude product and purification via steam distillation at 250 °C yielded the resin as colourless solid (137 g, 43% yield).

**Table 7: Analysis values example 6**

| **SP [°C]** | **Tg [°C]** | **Gardner colour** | **Mn [g/mol]** | **Mw [g/mol]** | **Mz [g/mol]** |
|---|---|---|---|---|---|
| 154 | 100 | 0.5 | 3064 | 8484 | 15904 |

### Example 7

A 1 L tank reactor equipped with an overhead stirrer was charged with decolourized VT-fraction (406 g) and AMS (234 g). After the mixture was cooled to 0 °C, the reaction was started by adding BF₃·(OEt₂) in portions (1.98 mL, 0.5 wt.% on monomers) and subsequently stirred for 240 min at 0 °C. Then, the reaction was quenched by releasing the mixture into a solution of pyridine (1.9 g) and toluene (250 g). Filtration of the crude product and purification via steam distillation at 250 °C yielded the resin as colourless solid (234 g, 83% yield).

**Table 8: Analysis values example 7**

| **SP [°C]** | **Tg [°C]** | **Gardner colour** | **Mn [g/mol]** | **Mw [g/mol]** | **Mz [g/mol]** |
|---|---|---|---|---|---|
| 148 | 90 | 0.5 | 2026 | 5965 | 11445 |

### Example 8

A 1 L tank reactor equipped with an overhead stirrer was charged with decolourized VT-fraction (406 g) and AMS (234 g). After the mixture was cooled to 0 °C, the reaction was started by adding BF₃·(OEt₂) in portions (1.98 mL, 0.5 wt.% on monomers) and subsequently stirred for 40 min at 0 °C. Then, the reaction was quenched by releasing the mixture into a solution of pyridine (1.5 g) and toluene (200 g). Filtration of the crude product and purification via steam distillation at 250 °C yielded the resin as colourless solid (170 g, 48% yield).

**Table 9: Analysis values example 8**

| **SP [°C]** | **Tg [°C]** | **Gardner colour** | **Mn [g/mol]** | **Mw [g/mol]** | **Mz [g/mol]** |
|---|---|---|---|---|---|
| 153 | 100 | 0.4 | 2707 | 7146 | 12379 |

### Example 9

A 1 L tank reactor equipped with an overhead stirrer was charged with VT (160 g), AMS (160 g) and xylene (480 g). After the mixture was cooled to 0 °C, the reaction was started by adding BF₃·(OEt₂) in portions (1.42 mL, 0.5 wt.% on monomers) and subsequently stirred for 240 min at 0° C. Then, the reaction was quenched by releasing the mixture into a solution of pyridine (1.5 g) and toluene (20 g). Filtration of the crude product and purification via steam distillation at 250 °C yielded the resin as colourless solid (180 g, 89% yield).

**Table 10: Analysis values example 9**

| **SP [°C]** | **Tg [°C]** | **Gardner colour** | **Mn [g/mol]** | **Mw [g/mol]** | **Mz [g/mol]** |
|---|---|---|---|---|---|
| 159 | 102 | 0.2 | 3018 | 9190 | 16672 |

### Example 10

A 1 L tank reactor equipped with an overhead stirrer was charged with VT (160 g), AMS (160 g) and xylene (480 g). After the mixture was cooled to 0 °C, the reaction was started by adding BF₃·(OEt₂) in portions (1.42 mL, 0.5 wt.% on monomers) and subsequently stirred for 40 min at 0° C. Then, the reaction was quenched by releasing the mixture into a solution of pyridine (1.5 g) and toluene (20 g). Filtration of the crude product and purification via steam distillation at 250 °C yielded the resin as colourless solid (154 g, 69% yield).

**Table 11: Analysis values example 10**

| **SP [°C]** | **Tg [°C]** | **Gardner colour** | **Mn [g/mol]** | **Mw [g/mol]** | **Mz [g/mol]** |
|---|---|---|---|---|---|
| 160 | 105 | 0.4 | 4339 | 11745 | 19448 |

### Example 11

A 1 L tank reactor equipped with an overhead stirrer was charged with VT (160 g), AMS (160 g) and xylene (480 g). After the mixture was cooled to 10 °C, the reaction was started by adding BF₃·(OEt₂) in portions (1.42 mL, 0.5 wt.% on monomers) and subsequently stirred for 240 min at 10 °C. Then, the reaction was quenched by releasing the mixture into a solution of pyridine (1.5 g) and toluene (20 g). Filtration of the crude product and purification via steam distillation at 250 °C yielded the resin as colourless solid (192 g, 91% yield).

**Table 12: Analysis values example 11 (comp.)**

| **SP [°C]** | **Tg [°C]** | **Gardner colour** | **Mn [g/mol]** | **Mw [g/mol]** | **Mz [g/mol]** |
|---|---|---|---|---|---|
| 143 | 92 | 0.1 | 2109 | 5048 | 8817 |

### Example 12

A 1 L tank reactor equipped with an overhead stirrer was charged with VT (160 g), AMS (160 g) and xylene (480 g). After the mixture was cooled to 10 °C, the reaction was started by adding BF₃·(OEt₂) in portions (1.42 mL, 0.5 wt.% on monomers) and subsequently stirred for 40 min at 10 °C. Then, the reaction was quenched by releasing the mixture into a solution of pyridine (1.5 g) and toluene (20 g). Filtration of the crude product and purification via steam distillation at 250 °C yielded the resin as colourless solid (123 g, 62% yield).

**Table 13: Analysis values example 12**

| **SP [°C]** | **Tg [°C]** | **Gardner colour** | **Mn [g/mol]** | **Mw [g/mol]** | **Mz [g/mol]** |
|---|---|---|---|---|---|
| 154 | 103 | 0.1 | 2680 | 5939 | 9704 |

### Example 13 (comp.)

A 1 L tank reactor equipped with an overhead stirrer was charged with VT (224 g), AMS (96 g) and xylene (480 g). After the mixture was cooled to 0 °C, the reaction was started by adding BF₃·(OEt₂) in portions (1.42 mL, 0.5 wt.% on monomers) and subsequently stirred for 240 min at 0 ° C. Then, the reaction was quenched by releasing the mixture into a solution of pyridine (1.5 g) and toluene (20 g). Filtration of the crude product and purification via steam distillation at 250 °C yielded the resin as colourless solid (186 g, 89% yield).

**Table 14: Analysis values example 13 (comp.)**

| **SP [°C]** | **Tg [°C]** | **Gardner colour** | **Mn [g/mol]** | **Mw [g/mol]** | **Mz [g/mol]** |
|---|---|---|---|---|---|
| 155 | 100 | 0.2 | 3961 | 13231 | 24068 |

### Example 14

A 1 L tank reactor equipped with an overhead stirrer was charged with VT (224 g), AMS (96 g) and xylene (480 g). After the mixture was cooled to 0 °C, the reaction was started by adding BF₃·(OEt₂) in portions (1.42 mL, 0.5 wt.% on monomers) and subsequently stirred for 40 min at 0 °C. Then, the reaction was quenched by releasing the mixture into a solution of pyridine (1.5 g) and toluene (20 g). Filtration of the crude product and purification via steam distillation at 250 °C yielded the resin as colourless solid (136.7 g, 66% yield).

**Table 15: Analysis values example 14**

| **SP [°C]** | **Tg [°C]** | **Gardner colour** | **Mn [g/mol]** | **Mw [g/mol]** | **Mz [g/mol]** |
|---|---|---|---|---|---|
| 161 | 102 | 0.3 | 5449 | 15918 | 25906 |

### Example 15

A 1 L tank reactor equipped with an overhead stirrer was charged with VT (144 g), AMS (176 g) and xylene (480 g). After the mixture was cooled to 0 °C, the reaction was started by adding BF₃·(OEt₂) in portions (1.42 mL, 0.5 wt.% on monomers) and subsequently stirred for 240 min at 0 °C. Then, the reaction was quenched by releasing the mixture into a solution of pyridine (1.5 g) and toluene (20 g). Filtration of the crude product and purification via steam distillation at 250 °C yielded the resin as colourless solid (195 g, 91% yield).

**Table 16: Analysis values example 15 (comp.)**

| **SP [°C]** | **Tg [°C]** | **Gardner colour** | **Mn [g/mol]** | **Mw [g/mol]** | **Mz [g/mol]** |
|---|---|---|---|---|---|
| 159 | 102 | 0.1 | 3181 | 9250 | 16858 |

### Example 16

A 1 L tank reactor equipped with an overhead stirrer was charged with VT (144 g), AMS (176 g) and xylene (480 g). After the mixture was cooled to 0 °C, the reaction was started by adding BF₃·(OEt₂) in portions (1.42 mL, 0.5 wt.% on monomers) and subsequently stirred for 40 min at 0 °C. Then, the reaction was quenched by releasing the mixture into a solution of pyridine (1.5 g) and toluene (20 g). Filtration of the crude product and purification via steam distillation at 250 °C yielded the resin as colourless solid (139 g, 64% yield).

**Table 17: Analysis values example 16**

| **SP [°C]** | **Tg [°C]** | **Gardner colour** | **Mn [g/mol]** | **Mw [g/mol]** | **Mz [g/mol]** |
|---|---|---|---|---|---|
| 162 | 107 | 0.2 | 3678 | 10359 | 17630 |

### Example 17

A 1 L tank reactor equipped with an overhead stirrer was charged with p-vinyltoluene (160 g), AMS (160 g) and xylene (480 g). After the mixture was cooled to 10 °C, the reaction was started by adding BF₃·(OEt₂) in portions (1.42 mL, 0.5 wt.% on monomers) and subsequently stirred for 30 min at 10 °C. Then, the reaction was quenched by releasing the mixture into a solution of pyridine (1.5 g) and toluene (20 g). Filtration of the crude product and purification via steam distillation at 250 °C yielded the resin as colourless solid (176 g, 75% yield).

**Table 18: Analysis values example 17**

| **SP [°C]** | **Tg [°C]** | **Gardner colour** | **Mn [g/mol]** | **Mw [g/mol]** | **Mz [g/mol]** |
|---|---|---|---|---|---|
| 161 | 111 | 0.1 | 3715 | 9224 | 14973 |

### Example 18

A 1 L tank reactor equipped with an overhead stirrer was charged with p-vinyltoluene (160 g), AMS (160 g) and xylene (480 g). After the mixture was cooled to 10 °C, the reaction was started by adding BF₃·(OEt₂) in portions (1.42 mL, 0.5 wt.% on monomers) and subsequently stirred for 60 min at 10 °C. Then, the reaction was quenched by releasing the mixture into a solution of pyridine (1.5 g) and toluene (20 g). Filtration of the crude product and purification via steam distillation at 250 °C yielded the resin as colourless solid (197 g, 96% yield).

**Table 19: Analysis values example 18**

| **SP [°C]** | **Tg [°C]** | **Gardner colour** | **Mn [g/mol]** | **Mw [g/mol]** | **Mz [g/mol]** |
|---|---|---|---|---|---|
| 160 | 110 | 0.2 | 3297 | 8695 | 14712 |

### Example 19

A 1 L tank reactor equipped with an overhead stirrer was charged with p-vinyltoluene (160 g), AMS (160 g) and xylene (480 g). After the mixture was cooled to 0 °C, the reaction was started by adding BF₃·(OEt₂) in portions (1.42 mL, 0.5 wt.% on monomers) and subsequently stirred for 90 min at 0 °C. Then, the reaction was quenched by releasing the mixture into a solution of pyridine (1.5 g) and toluene (20 g). Filtration of the crude product and purification via steam distillation at 250 °C yielded the resin as colourless solid (199 g, 88% yield).

**Table 20: Analysis values example 19**

| **SP [°C]** | **Tg [°C]** | **Gardner colour** | **Mn [g/mol]** | **Mw [g/mol]** | **Mz [g/mol]** |
|---|---|---|---|---|---|
| 164 | 109 | 0.1 | 4514 | 15563 | 25971 |

### Overview of examples and their product properties

**Table 21: Impact of conversion and decolourization on the product properties of VT-fraction-based resins**

| | **Ex. 1** | **Ex. 2** | **Ex. 3** | **Ex. 4** |
|---|---|---|---|---|
| Feed decolourization | yes | yes | no | yes |
| T (reaction) [°C] | 0 | 0 | 0 | 10 |
| t (reaction) [min] | 240 | 40 | 40 | 60 |
| Yield [wt.%] | 72 | 49 | 37 | 67 |
| SP [°C] | 141 | 158 | 158 | 138 |
| Tg [°C] | 89 | 100 | 99 | 87 |
| Mn [g/mol] | 1763 | 2862 | 2853 | 1562 |
| Mw [g/mol] | 4152 | 8568 | 9729 | 3118 |
| Mz [g/mol] | 7224 | 14756 | 18039 | 5124 |
| Gardner colour | 0.2 | 0.8 | 8.2 | 0.3 |

| | | | | |
|---|---|---|---|---|
| Reaction conditions: catalyst (BF₃·OEt₂) = 0.5 wt.%; VT fraction was used as the starting material (decolourized or not) | | | | |

As shown in Table 21, an increased molecular weight, Tg, and SP of the resulting resins could be achieved under otherwise equal reaction conditions simply by reducing the conversion rate of the copolymerization of AMS and VT-fraction by premature quenching of the polymerization reaction (example 1 vs. example 2 and example 3). Notably, the decolourization of the VT-fraction feedstock has no impact on reaction behaviour (example 2 vs. example 3) and has a neglectable influence on the feedstock composition (Table 22). An increase in reaction temperature from 0 °C to 10 °C (example 4) resulted in a decreased SP, Tg, and molecular weight of the resulting resins.

**Table 22: Feedstock composition of examples 1 to 4**

| | **Ex. 1, Ex. 2, Ex. 4** | **Ex. 3** |
|---|---|---|
| AMS [wt.%] | 29.3 | 32.6 |
| o-VT [wt.%] | 7.2 | 7.9 |
| m-VT [wt.%] | 17.9 | 19.7 |
| p-VT [wt.%] | 4.1 | 5.2 |
| Other [wt.%] | 2.2 | 1.8 |
| Non-reactive compounds [wt.%] | 40.0 | 32.9 |

A GC analysis of the distillate generated by the distillation of the crude product of example 1 and example 2 in contrast to the corresponding feed (Table 23) demonstrates that all isomer types of VT (ortho, meta, and para) are incorporated in the final product.

**Table 23: Comparison of feed and distillate of example 1 (comp.) and example 2**

| | **Feedstock of Ex. 1 and Ex. 2** | **Distillate of Ex. 1** | **Distillate of Ex. 2** |
|---|---|---|---|
| AMS [wt.%] | 29.3 | 8.3 | 14.8 |
| o-VT [wt.%] | 7.2 | 2.9 | 5.6 |
| m-VT [wt.%] | 17.9 | 5.1 | 8.9 |
| p-VT [wt.%] | 4.1 | 0.4 | 0.9 |
| Other [wt.%] | 2.2 | 0.7 | 1.1 |
| Non-reactive compounds [wt.%] | 39.4 | 82.7 | 68.7 |

**Table 24: Impact of the conversion on the product properties of VT-fraction-based resins with different AMS/VT ratios**

| | **Ex. 5** | **Ex. 6** | **Ex. 7** | **Ex. 8** |
|---|---|---|---|---|
| t (reaction) [min] | 240 | 40 | 240 | 40 |
| AMS [wt.%] | 16.8 | 16.8 | 41.2 | 41.2 |
| o-VT [wt.%] | 9.8 | 9.8 | 6.8 | 6.8 |
| m-VT [wt.%] | 23.9 | 23.9 | 16.7 | 16.7 |
| p-VT [wt.%] | 5.6 | 5.6 | 3.9 | 3.9 |
| Other [wt.%] | 2.2 | 2.2 | 1.5 | 1.5 |
| Non-reactive compounds [wt.%] | 41.7 | 41.8 | 29.9 | 29.9 |
| Yield [wt%] | 65 | 43 | 78 | 48 |
| SP [°C] | 151 | 154 | 148 | 153 |
| Tg [°C] | 98 | 100 | 90 | 100 |
| Mn [g/mol] | 2810 | 3064 | 2026 | 2707 |
| Mw [g/mol] | 7819 | 8484 | 5965 | 7146 |
| Mz [g/mol] | 14205 | 15904 | 11445 | 12379 |
| Gardner colour | 0.4 | 0.5 | 0.5 | 0.4 |

| | | | | |
|---|---|---|---|---|
| Reaction conditions: all feeds were decolourized in accordance with the described purification method; T = 0 °C; decolourized VT-fraction was used as the starting material | | | | |

As shown in Table 24, an increased molecular weight, Tg, and SP of the resulting resins could be achieved under otherwise equal reaction conditions simply by reducing the conversion rate of the copolymerization of AMS and VT-fraction by premature quenching of the polymerization (example 5 vs. example 6; example 7 vs. example 8). Notably, the variation of the AMS/VT ratio has only a slight effect on SP and molecular weight, with example 1 (AMS/VT=50:50; Table 21) showing a slightly higher SP than examples 6 (AMS/VT=30:70) and 8 (AMS/VT=60:40), and example 8 showing a slightly reduced molecular weight compared to the other resins. The Tg is the same for all three examples. The experiments thus demonstrate the possibility to achieve a high SP of more than 150 °C even with comparatively low AMS content.

**Table 25: Impact of the conversion on the product properties of resins at different temperatures and with different VT isomer ratios**

| | **Ex. 9** | **Ex. 10** | **Ex. 11** | **Ex. 12** | **Ex. 17** | **Ex. 18** | **Ex. 19** |
|---|---|---|---|---|---|---|---|
| AMS [wt.%] | 20 | 20 | 20 | 20 | 20 | 20 | 20 |
| m-VT [wt.%] | 8.9 | 8.9 | 8.9 | 8.9 | 0.1 | 0.1 | 0.1 |
| p-VT [wt.%] | 11.1 | 11.1 | 11.1 | 11.1 | 19.9 | 19.9 | 19.9 |
| Xylene [wt.%] | 60 | 60 | 60 | 60 | 60 | 60 | 60 |
| T (reaction) [°C] | 0 | 0 | 10 | 10 | 10 | 10 | 0 |
| t (reaction) [min] | 240 | 40 | 240 | 40 | 30 | 60 | 90 |
| Yield [wt.%] | 89 | 69 | 91 | 62 | 75 | 96 | 88 |
| SP [°C] | 159 | 160 | 143 | 154 | 161 | 160 | 164 |
| Tg [°C] | 102 | 102 | 92 | 103 | 111 | 110 | 109 |
| Mn [g/mol] | 3018 | 4339 | 2109 | 2680 | 3718 | 3297 | 4514 |
| Mw [g/mol] | 9190 | 11745 | 5048 | 5939 | 9220 | 8695 | 15563 |
| Mz [g/mol] | 16672 | 19448 | 8817 | 9704 | 14937 | 14712 | 25971 |
| Gardner colour | 0.2 | 0.4 | 0.1 | 0.1 | 0.1 | 0.1 | 0.1 |

| | | | | | | | |
|---|---|---|---|---|---|---|---|
| Reaction conditions: VT was used as the starting material (Sigma-Aldrich, 44% meta, 56% para, see above) for examples 9 to 12; synthetic p-VT (0.5% meta, 99.5% para) was used for examples 17 to 19 | | | | | | | |

As shown in Table 25, an increased molecular weight, Tg, and SP of the resulting resins could be achieved for the resins based on synthetic VT with 44% meta-isomer and 56% para-isomer content under otherwise equal reaction conditions simply by reducing the conversion rate of the copolymerization of AMS and VT by premature quenching of the polymerization reaction (example 9 vs. example 10; example 11 vs. example 12), as described above also for the resins based on the VT-fraction. Additionally, it can also be seen that a temperature increase from 0 °C to 10 °C again leads to lower SP, TG, and molecular weight.

**Table 26: Impact of the conversion on the product properties of VT-based resins at different AMS/VT ratios**

| | **Ex. 13** | **Ex. 14** | **Ex. 15** | **Ex. 16** |
|---|---|---|---|---|
| AMS [wt.%] | 12 | 12 | 22 | 22 |
| m-VT [wt.%] | 13 | 13 | 8 | 8 |
| p-VT [wt.%] | 16 | 16 | 10 | 10 |
| Xylene [wt.%] | 60 | 60 | 60 | 60 |
| t (reaction) [min] | 240 | 40 | 240 | 40 |
| Yield [wt.%] | 89 | 66 | 91 | 64 |
| SP [°C] | 155 | 161 | 159 | 162 |
| Tg [°C] | 100 | 102 | 102 | 107 |
| Mn [g/mol] | 3961 | 5449 | 3181 | 3678 |
| Mw [g/mol] | 13231 | 15918 | 9250 | 10359 |
| Mz [g/mol] | 24068 | 25906 | 16858 | 17630 |
| Gardner colour | 0.2 | 0.3 | 0.1 | 0.2 |

| | | | | |
|---|---|---|---|---|
| Reaction conditions: T = 0 °C; VT-source = synthetic VT (44% meta, 56% para) | | | | |

As shown in Table 26, an increased molecular weight, Tg, and SP of the resulting resins could be achieved for the resins based on synthetic VT with 44% meta-isomer and 56% para-isomer content under otherwise equal reaction conditions simply by reducing the conversion rate of the copolymerization of AMS and VT by premature quenching of the reaction (example 13 vs. example 14; example 15 vs. example 16) also for other VT/AMS ratios than those shown in Table 25. Notably, the variation of the AMS/VT ratio has only a slight effect on SP and Tg, with example 16 (AMS/VT=55:45) showing a slightly higher Tg than examples 10 (AMS/VT=50:50; Table 25) and 14 (AMS/VT=30:70), while the SP remains almost constant at 160-162 °C. Example 14, with low AMS content, however shows a significantly increased molecular weight compared to examples 10 and 16. The experiments thus demonstrate the possibility to achieve a high SP of 160 °C or more even with comparatively low AMS content.

### Application of the AMS-VT resins in a PSA formulation

The AMS-VT resins prepared from isomeric mixtures as shown in the examples above are suitable as modifiers in adhesive or plastic formulations, particularly in PSA adhesives to improve the heat resistance. To demonstrate this effect, an AMS-VT resin prepared from VT-fraction (example 2) was tested in contrast to commonly prepared AMS-VT resins (example 1) and AMS-VT resins with pure p-VT (examples 18 and 19) in a typical PSA base formulation (Table 27), substituting either 3.5 wt.% or 7 wt.% of a typical C5 resin (Escorez 1310 LC).

**Table 27: PSA base formulation (Ref.)**

| **Component** | **Amount [phr]** |
|---|---|
| Kraton D1163 | 75 |
| Kraton D1114 | 25 |
| Escorez 1310 LC | 125 |
| Catenex T 145 | 18 |
| Irganox 1010 | 2.2 |

**Table 28: PSA test results**

| | **Ref.** | **Ex. 1** | | **Ex. 2** | | **Ex. 18** | | **Ex. 19** | |
|---|---|---|---|---|---|---|---|---|---|
| AMS-VT resin [wt.%] | - | 3.5 | 7 | 3.5 | 7 | 3.5 | 7 | 3.5 | 7 |
| Loop tack [N/25 mm] | 23.1 | 17.7 | 51.9 | 43.8 | 43.3 | 43.2 | 24.7 | 40.9 | 34.9 |
| Rolling ball [cm] | 18 | 25 | 8 | 8 | 6 | 7 | 10 | 11 | 19 |
| SAFT steel [°C] | 96 | 90 | 90 | 99 | 103 | 95 | 88 | 99 | 99 |
| SAFT PE [°C] | 89 | 88 | 90 | 87 | 93 | 91 | 87 | 87 | 87 |
| Holding power [min] | 1248 | 1265 | 3100 | 4300 | 7200^{a} | 660 | 1000 | 4200 | 7200^{a} |
| Peel steel [N/25 mm] | 31.6 | 27.7 | 42.4 | 13.7 | 37.8 | 30.0 | 28.0 | 35.4 | 37.9 |
| Peel PE [N/25 mm] | 11.4 | 11.5 | 17.4 | 22.1 | 14.8 | 11.9 | 13.1 | 12.8 | 21.1 |

| | | | | | | | | | |
|---|---|---|---|---|---|---|---|---|---|
| ^{a} - reached maximum measurement value of 7200 min | | | | | | | | | |

The results of the application trial are summarized in Table 28. While the resin of example 1 yields satisfying results, the formulation with example 2 at 7 wt.% even has a superior SAFT on PE and steel, showing an improved thermal stability when compared to example 1 and to the reference. The holding power is also increased, maintaining adhesion at 70 °C for at least 7200 min, comparable to a pure p-VT resin (example 19). This is important for withstanding prolonged load conditions in applications requiring long-term performance. The results show that AMS-VT resins with a high SP prepared according to the method of the invention enhance the overall performance of the adhesive formulation across multiple parameters.

## Claims

1. Hydrocarbon resin comprising alpha-methylstyrene repeating units and vinyltoluene repeating units, **characterised in that** the hydrocarbon resin comprises at least 40 wt.% meta-vinyltoluene repeating units, based on the total mass of the vinyltoluene repeating units, or
**in that** the hydrocarbon resin comprises at least 30 wt.% meta-vinyltoluene repeating units and at least 5 wt.%, preferably at least 10 wt.%, more preferably at least 15 wt.%, even more preferably at least 20 wt.% ortho-vinyltoluene repeating units, based on the total mass of the vinyltoluene repeating units, or
**in that** the hydrocarbon resin comprises at least 85 wt.% para-vinyltoluene repeating units, based on the total mass of the vinyltoluene repeating units, and has a Mw of 2,500 to 30,000 g/mol, preferably of 5,000 to 27,000 g/mol, more preferably of 7,000 to 25,000 g/mol, even more preferably of 8,000 to 12,000 g/mol, and/or a Mn of 1,000 to 7,000 g/mol, preferably of 1,500 to 6,000 g/mol, more preferably of 2,500 to 5,000 g/mol, and/or a Mz of 4,000 to 30,000 g/mol, preferably of 5,000 to 27,000 g/mol, more preferably of 10,000 to 20,000 g/mol.

2. Hydrocarbon resin according to claim 1, **characterised in that** the hydrocarbon resin contains the alpha-methylstyrene repeating units and the vinyltoluene repeating units in a weight ratio of 25:75 to 75:25, preferably of 30:70 to 70:30, more preferably of 40:60 to 60:40, even more preferably of 50:50, based on the total mass of the hydrocarbon resin.

3. Hydrocarbon resin according to any one of the preceding claims, **characterised in that** the hydrocarbon resin has a Gardner colour number of 5 or less, preferably of 2 or less, more preferably of 1 or less, more preferably of 0.8 or less, even more preferably of 0.5 or less, most preferably of 0.3 or less.

4. Hydrocarbon resin according to any one of the preceding claims, **characterised in that** the hydrocarbon resin has a softening point according to ASTM 3461 of 120 °C to 190 °C, preferably of 130 °C to 180 °C, more preferably of 140 °C to 170 °C, even more preferably of 150 °C to 165 °C.

5. Hydrocarbon resin according to any one of the preceding claims, **characterised in that** the hydrocarbon resin has a Tg of 70 °C to 120 °C, preferably of 85 °C to 115 °C, more preferably of 95 °C to 110 °C.

6. Hydrocarbon resin according to any one of the preceding claims, **characterised in that** the hydrocarbon resin has a weight-average molecular weight Mw of 2,500 to 30,000 g/mol, preferably of 5,000 to 27,000 g/mol, more preferably of 7,000 to 25,000 g/mol, even more preferably of 8,000 to 12,000 g/mol, and/or a number-average molecular weight Mn of 1,000 to 7,000 g/mol, preferably of 1,500 to 6,000 g/mol, more preferably of 2,500 to 5,000 g/mol, and/or a z-average molecular weight Mz of 4,000 to 30,000 g/mol, preferably of 5,000 to 27,000 g/mol, more preferably of 10,000 to 20,000 g/mol.

7. Hydrocarbon resin according to any one of the preceding claims, **characterised in that** the hydrocarbon resin has a polydispersity index (PDI) of 1 to 3.0, preferably of 1.5 to 2.8, more preferably of 1.5 to 2.5, even more preferably of 1.5 to 2.3, most preferably of 1.5 to 2.1.

8. Method for the production of a hydrocarbon resin according to any one of claims 1 to 7, **characterised in that** a polymerisation of a monomer mixture comprising alpha-methylstyrene and a vinyltoluene isomer mixture is conducted.

9. Method according to claim 8, **characterised in that** the polymerisation is conducted for a period of 10 to 80 min, preferably of 20 to 70 min, more preferably of 30 to 60 min, even more preferably of 35 to 50 min and/or until a conversion of monomers of 50 % to 80 %, preferably of 65 % to 75 %, more preferably of 60 % to 70 %, even more preferably of 65 % to 69 %, based on the amount of monomers in the monomer mixture, is reached.

10. Method according to claim 8 or 9, **characterised in that** the vinyltoluene isomer mixture comprises at least 40 wt.% meta-vinyltoluene, based on the total mass of the vinyltoluene isomer mixture.

11. Method according to any one of claims 8 to 10, **characterised in that** the vinyltoluene isomer mixture comprises at least 5 wt.%, preferably at least 10 wt.%, more preferably at least 15 wt.%, even more preferably at least 20 wt.% ortho-vinyltoluene, based on the total mass of the vinyltoluene isomer mixture, or **in that** the vinyltoluene isomer mixture comprises at least 30 wt.% meta-vinyltoluene and at least 5 wt.%, preferably at least 10 wt.%, more preferably at least 15 wt.%, even more preferably at least 20 wt.% ortho-vinyltoluene, based on the total mass of the vinyltoluene isomer mixture, or
**in that** the vinyltoluene isomer mixture comprises at least 85 wt.% para-vinyltoluene.

12. Method according to any one of claims 8 to 11, **characterised in that** the vinyltoluene isomer mixture comprises 20-30 wt.% para-vinyltoluene, 20-30 wt.% ortho-vinyltoluene, and 40-60 wt.% meta-vinyltoluene, based on the total mass of the vinyltoluene isomer mixture.

13. Method according to any one of claims 8 to 12, **characterised in that** the polymerisation is carried out at a temperature of -20 °C to 20 °C, preferably of -10 °C to 10 °C, more preferably of -5 °C to 5 °C.

14. Method according to any one of claims 8 to 13, **characterised in that** the polymerisation is carried out in a batch reactor.

15. Method according to any one of claims 8 to 14, **characterised in that** the monomer mixture comprises a non-polymerisable solvent, preferably selected from the group consisting of o-xylene, m-xylene, p-xylene, ethylbenzene, and mixtures thereof.

16. Method according to any one of claims 8 to 15, **characterised in that** the polymerisation is carried out using a Friedel-Crafts-catalyst, preferably a Lewis acid or a Bronsted acid, more preferably a catalyst selected from the group consisting of aluminium trichloride, boron trifluoride, boron trichloride, tin tetrachloride, titanium tetrachloride, para-toluene sulfonic acid, and mixtures thereof, most preferably boron trifluoride diethyl etherate.

17. Method according to any one of claims 8 to 16, **characterised in that** the vinyltoluene isomer mixture is obtained via synthesis or from a C9 fraction by a combination of distillation and pre-polymerisation.

18. Use of the hydrocarbon resin according to any one of claims 1 to 7 and/or obtainable by the method according to any one of claims 8 to 17 in pressure-sensitive adhesives, reactive hot melt adhesives, sealants, plastic compounds, or thermoplastic elastomer compounds.

19. Composition comprising
- the hydrocarbon resin according to any one of claims 1 to 7 and/or obtainable by the method according to any one of claims 8 to 17 and
- rubber, preferably selected from the group consisting of styrene-isoprene rubber (SIS), styrene-butadiene rubber (SBS), styrene-ethylene-butadiene rubber (SEES),
- and/or oil,
- and/or a hydrocarbon resin, preferably a C5-hydrocarbon resin or a hydrogenated C9-hydrocarbon resin, a DCPD-C9-hydrocarbon resin or a DCPD resin,
- and/or a plastic compound, preferably a polystyrene homopolymer or a styrene block copolymer (SBC),
- and optionally an antioxidant.

20. Use of the composition according to claim 19 in labels, tapes, protective films, hygiene products, in particular diapers.
